# EUROPEAN PATENT APPLICATION

(11) **EP 4 507 383 A1**
(43) Date of publication of application: **12.02.2025**
(21) Application number: 24194071.7
(22) Date of filing: 12.08.2024
(51) Int. Cl.: H04W 36/00, H04W 36/30, H04W 76/18

(54) **METHOD TO CATEGORIZE SCG HANDOVER FAILURES IN DUAL CONNECTIVITY**

(30) Priority: 10.08.2023 IN 202321053753; 02.08.2024 US 202418793198
(71) Applicant: Mavenir Systems, Inc., Richardson, TX 75081 (US)
(72) Inventor: S., Srinivasan, 560037 Bangalore (IN); MITTAL, Satish, 122018 Gurgaon (IN)
(74) Representative: dompatent von Kreisler Selting Werner - Partnerschaft von Patent- und Rechtsanwälten mbB

(57) **Abstract**

With MR-DC, UE is connected to both MCG and SCG. When an MCG handover failure occurs, there is a defined method to categorize the handover failures and take corrective actions, however, for SCG handover failures, there are no defined categorizations and corresponding corrective actions currently available. The current method facilitates identification and categorization of SCG handover failures to be categorized as too early, too late and wrong cell handovers. By fine-tuning the handover parameters (based on the SCG handover failure type) SCG handover failure rates would be reduced significantly.

## Description

### 1. Field of the Invention

The present disclosure is related to Dual Connectivity in Radio Access Networks. More particularly, the invention relates to Multi-Radio Dual Connectivity (MR-DC) within Long Term Evolution (LTE) or within New Radio (NR) or across both.

### 2. Description of Related Art

Multi-Radio Dual Connectivity (MR-DC) is a mechanism where multiple Rx/Tx capable User Equipment (UE) may be configured to utilize resources provided by two different nodes connected via non-ideal backhaul, one providing 5G New Radio (NR) access and the other one providing either Evolved-Universal Terrestrial Radio Access (E-UTRA) or NR access. One node performs the function of a Master Node (MN) and the other is a Secondary Node (SN). The MN and SN are connected via a network interface where at least the MN is connected to the core network.

A Master Cell Group (MCG) bearer is a radio bearer that is served only by a MN, while a Secondary Cell Group (SCG) bearer is a radio bearer that is served only by a SN.

Evolved-Universal Terrestrial Radio Access-New Radio refers to E-UTRA NR Dual Connectivity that allows a mobile device to exchange data between itself and a NR base station along with a simultaneous connection with an LTE base station. In this, a UE is connected to one evolved Node B (eNB) that acts as a MN and one evolved node - Next Generation Node B (en-gNB) that acts as a SN. The eNB is connected to the Evolved Packet Core (EPC) via the S1 interface and to the en-gNB via the X2 interface. The en-gNB is connected to the EPC via the S1-U interface.

Another MR-DC variant NE-DC refers to the dual connection of 5G NR (acting as MN) and 4G wireless access network (acting as SN).

Another MR-DC variant is NR-NR DC. In this, a UE is connected to one gNB that acts as a MN and another gNB that acts as a SN. In addition, NR-DC can also be used when a UE is connected to a single gNB, acting both as a MN and as a SN, and configuring both a MCG and a SCG.

Another MR-DC variant is NGEN-DC. In this Dual Connectivity configuration, the master RAN is a 4G ng-eNB and this is connected to 5GC. The secondary RAN node is a 5G gNB.

Along with MR-DC, dual connectivity is also possible with two eNB cells (belonging to same / different eNB). In this case, one of the eNB cells serves as the MCG bearer and other eNB cell serves as the SCG bearer.

During MN handover, failures can occur. Based on the detection, a handover failure may be categorized as too late, too early, or wrong cell handover. After the categorization of handover failure, handover related parameters are fine-tuned to reduce the handover failures.

With EN-DC, the UE is connected to both LTE and NR simultaneously. There is an MCG and a SCG. In the EN-DC context, MCG refers to LTE and SCG refers to NR. NR (gNB) can trigger SCG Inter-cell handover (Intra-frequency/Inter-frequency handover) when the UE moves from one 5G cell to another 5G cell. During this SCG (5G) handover, handover failure can occur due to being too late, too early, or wrong cell handover. It will be understood by those of skill in the art that Radio Resource Control (RRC) Reestablishment procedures used to detect too late, too early, or wrong cell handover function for the MCG. As of now however, there is no strategy or method to categorize the 5G SCG handover failures of too late, too early, or wrong cell handover.

Once reason for this lack of strategy is that it is difficult to determine the exact cause of an SCG handover failure. In order to explicitly understand why an SCG handover failure occurred, SgNB/UE logs must be analyzed to identify an exact root cause.

The same problem is applicable for other MR-DC mechanisms like NR-NR DC, NGEN-DC, NE-DC. In particular, 3GPP specifies the detection of failure mechanism only for MCG handover. There simply is no categorization of SCG handover failures in 3GPP specifications. Even for dual connectivity between the two eNB cells scenario, categorization of SCG handover failures does not exist nor it is defined by 3GPP.

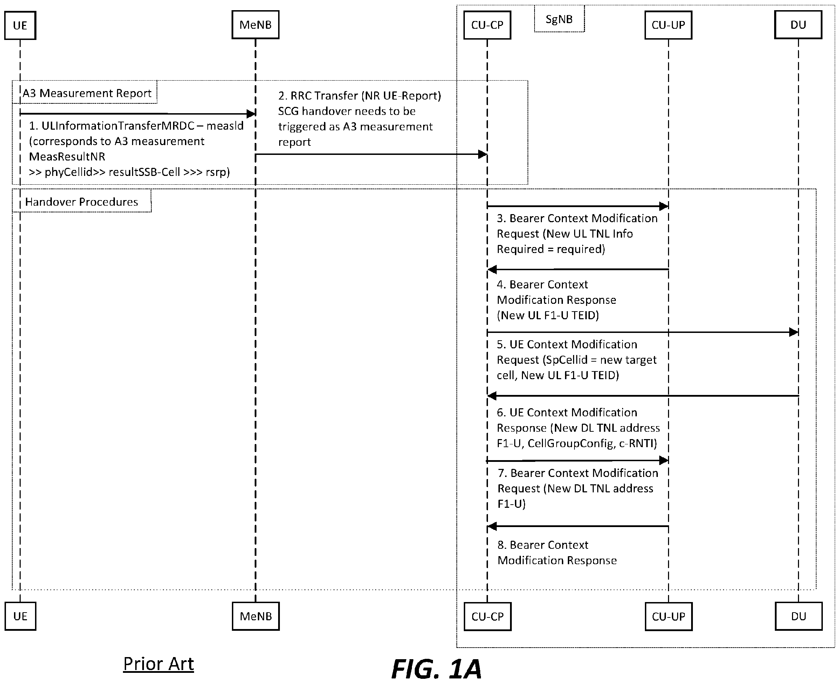

The sequence illustrated in FIGS. 1A-1B explains an Intra-DU SCG handover failure scenario and explains the current problem of Secondary gNB (SgNB) not being able to categorize the failure. A handover failure occurs from the User Equipment to the Distributed Unit. From the SgNB perspective, the handover has failed. However, the SgNB has no intelligence or data as to why the handover failure has occurred beyond the mere fact that it has occurred.

Accordingly, there is a need for a method to properly categorize SCG handover failures in Dual Connectivity so that handover related parameters can be fine-tuned to reduce the SCG handover failures.

### SUMMARY

Accordingly, what is desired is a system and method that properly categorizes SCG handover failures in MR-DC.

It is also desired to provide a system and method that properly categorizes SCG handover failures of too late, too early, or wrong cell handover.

It is further desired to provide a system and method that provides for properly categorizing SCG handover failures in MR-DC within LTE, NR or across both.

It is still further desired to provide a system and method using EN-DC that provides for categorizing 5G SCG handover failures when NR (gNB) triggers SCG Inter-cell handover when the UE moves from one 5G cell to another 5G cell.

In one configuration, a system is provided that categorizes SCG handover failures in MR-DC wherein UE accesses a MeNB, which connects to a 5G CU-CP. UE moves from 5G cell to another intra-DU 5G cell. So 5G-CU-CP needs to initiate intra DU handover from a source cell towards a target cell. The CU-CP allocates UE context in the target cell and stops a data flow from the DU when the UE context is successfully setup in the target cell in CU-UP and DU. Next, the DU stops transmission for the UE.

In the configuration above, when a random-access failure for the UE moving from the source cell to the target cell occurs in SCG, the UE triggers a SCG Radio Link Failure (RLF) message to the MeNB. The RLF message includes current NR measurement results at the time of the failure. The MeNB transmits the RLF message to the 5G CU-CP. The 5G CU-CP then decodes the RLF message and categorizes the handover failure to the target cell as: too early, or too late, or wrong cell handover.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

In one configuration, a method for categorizing Secondary Cell Group (SCG) handover failures in Multi-Radio Dual Connectivity (MR-DC) is provided comprising the steps of User Equipment (UE) accesses a Master evolved Node B (MeNB), which connects to a Control Unit-Control Plane (CU-CP) and to a Control Unit-User Plane (CU-UP) and initiates intra Distributed Unit (DU) handover from a source cell towards a target cell. The method further comprises the steps of the CU-CP allocating UE context in the target cell, the CU-CP stopping a data flow from the DU when the UE context is successfully setup in the target cell in CU-UP and DU, the DU stops the transmission for the UE and the CU-UP stops the transmission towards the source cell, and the CU-CP starting a timer for the duration of reconfiguration of the UE for the target cell. The method is provided such that when a random-access failure from the UE to the DU occurs, the UE triggers a Radio Link Failure (RLF) message to the MeNB, wherein the RLF message includes New Radio (NR) measurement results at the time of the failure, the MeNB transmits the RLF message to the CU-CP, the CU-CP decodes the RLF message and categorizes the handover failure to the target cell as: too early, or too late, or wrong cell handover.

In another configuration, a method for categorizing 5G Secondary Cell Group (SCG) handover failures in Multi-Radio Dual Connectivity (MR-DC) where User Equipment (UE) accesses a Master evolved Node B (MeNB) connected to a 5G Control Unit-Control Plane (CU-CP) and to a 5G Control Unit-User Plane (CU-UP) of the UE is provided, the method comprising the steps of: the SgNB initiating intra Distributed Unit (DU) handover from a source cell towards a target cell, the CU-CP allocating UE context in the target cell, and the CU-CP stopping a data flow from the DU when the UE context is successfully setup in the target cell in CU-UP and DU. The method further comprises the steps of: the DU stopping transmission of data for the UE and the CU-UP stopping the transmission of data for the UE toward the source cell, and the CU-CP starting a timer for a duration of reconfiguration of the UE for the target cell. The method is provided such that when a SCG random-access failure from the UE to the DU occurs, the UE triggers a Radio Link Failure (RLF) message to the MeNB, which includes New Radio (NR) measurement results at the time of the failure. Finally, the method comprises the steps of: the MeNB transmitting the RLF message to the 5G CU-CP, and the 5G CU-CP decoding the RLF message and categorizing the SCG failure.

The above-described and other features and advantages of the present disclosure will be appreciated and understood by those skilled in the art from the following detailed description, drawings, and appended claims.

### DESCRIPTION OF THE DRAWINGS

FIG. 1A is process diagram illustrating NSA - SgNB initiated Intra-DU SCG handover failures and the current problem of SgNB according to the prior art not being able to categorize the failures;
FIG. 1B is a continuation of the process diagram according to FIG. 1A;
FIG. 2 is a block diagram of one configuration of a Radio Access Network according to the invention;
FIG. 3A is a process diagram illustrating NSA - SgNB initiated intra-DU handover failure according to the system configuration of FIG. 2 with the ability to categorize the SCG handover failures; and
FIG. 3B is a continuation of the process diagram according to FIG. 3A.

### DETAILED DESCRIPTION

Referring now to the drawings, wherein like reference numerals designate corresponding structure throughout the views.

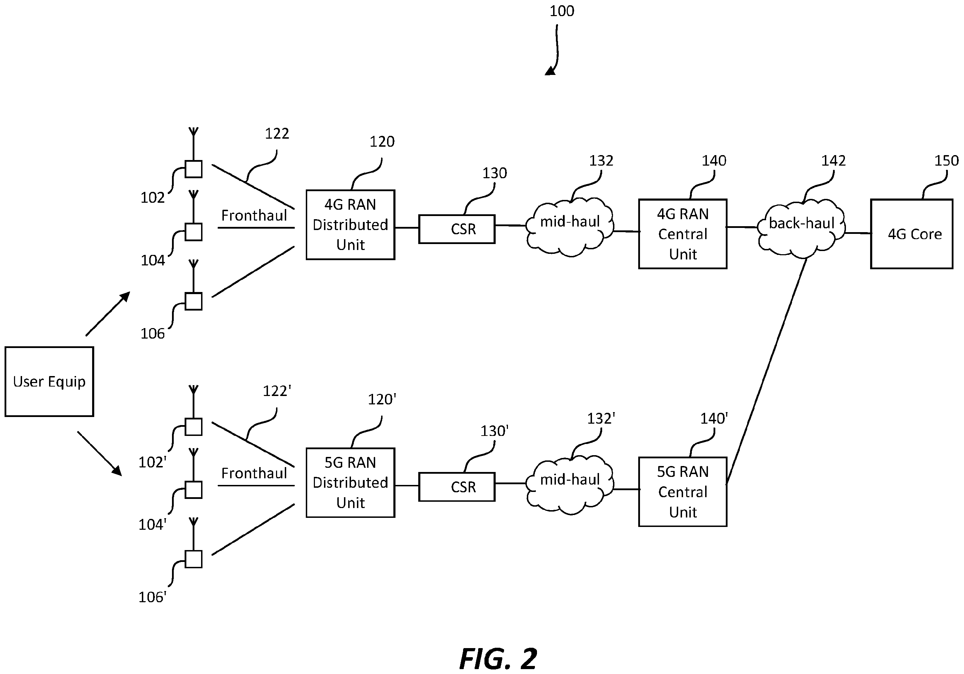

Referring now to FIG. 2, an O-RAN system 100 is illustrated. At the remote cell site location 100 a 4G RAN Distributed Unit (DU) server 120 is provided along with a Cell Site Router (CSR) 130. The CSR 130 allows the 4G RAN DU server 120 to communicate with RAN Central Unit (CU) server 140 via mid-haul connection 132. Mid-haul connection 132 can be a public Wide Area Network (WAN) or a leased line connection over the WAN. The RAN CU server 140 communicates with 4G Core equipment 150 via back-haul connection 142.

The RAN DU server 120 at remote cell site 100 communicates wirelessly with Remote Radio Units (RRUs) 102, 104, 106 via front-haul 122. It should be noted that while three RRUs are illustrated, additional RRUs may be connected to RAN DU server 120.

Also illustrated in FIG. 2 is a 5G RAN DU server 120' that is provided along with a CSR 130'. The CSR 130' allows the 5G RAN DU server 120' to communicate with RAN CU server 140' via mid-haul connection 132'. As previously stated, mid-haul connection 132' can be a public Wide Area Network (WAN) or a leased line connection over the WAN. The RAN CU server 140' communicates with 4G Core equipment 150 via back-haul connection 142.

The RAN DU server 120' at remote cell site 100' communicates wirelessly with RRUs 102', 104', 106' via front-haul 122'. As previously stated, it should be noted that while three RRUs are illustrated, additional RRUs may be connected to RAN DU server 120'.

While various functions and methods will be described and presented in a sequence of steps, the sequence has been provided merely as an illustration of one advantageous embodiment, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

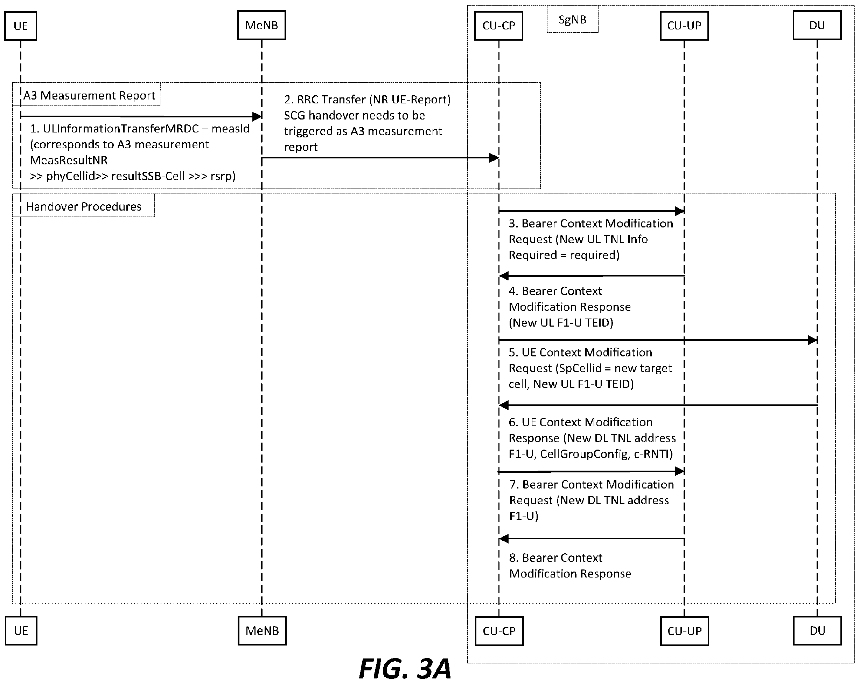

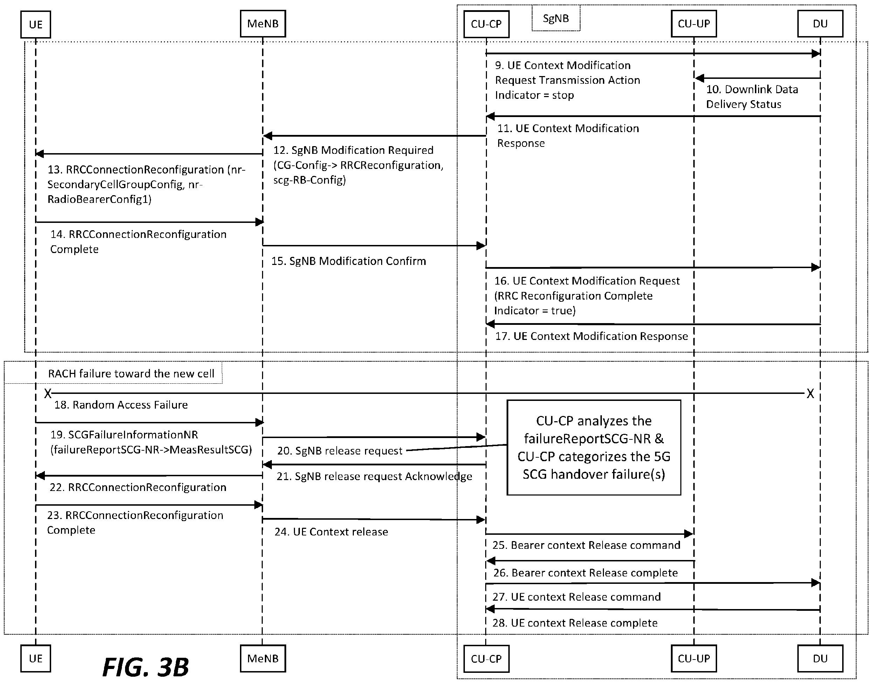

Referring now to FIGS. 3A and 3B, a process diagram is provided that diagrammatically illustrates the flow of information and process steps between various equipment according to one configuration of the present invention.

In FIG. 3A, A3 Measurement Report is configured for the intra-frequency handover. It should be noted that SgNB addition is already completed, MeasConfig is included as part of the SgNB addition procedure. When UE moves from one NR cell to another NR cell, the configured NR measurement event (A3) would be satisfied. The following sequence diagram explains the Intra-DU SCG handover failure scenario along with an analysis from the SgNB. The same scenario is applicable for inter-frequency handover. Moreover, the type of the SCG handover could be inter-DU and inter-CU as well.

At 1), the UE sends the ULInformationTransferMRDC with the measurement results containing the intra-frequency neighbor cell Physical Cell Identifier (PCI) and the corresponding Reference Signal Received Power (RSRP) to Master eNB (MeNB).

At 2) MeNB shall handle this message and send the same message as a container in the message Radio Resource Control (RRC) transfer (NR UE-Report) to the Control Unit-Control Plane (CU-CP). Accordingly, as can be seen the system provides for reporting PhyCellid present in the same DU and allows for initiating Intra-DU handover towards the target cell.

Process steps 1) and 2) comprise the A3 Measurement Report portion of the process as indicated in FIG. 3A. Process steps 3) - 17) describe the Handover Procedures and will be described next.

Process steps numbers 3) to 8) correspond to UE context creation at the target cell.

Process step at 3) gNB CU-CP decodes the RRC transfer message and the measurement report related to A3/A5. The retrieved Physical Cell Identifier (PCI) belongs to other cells in the serving DU. So, gNB CU-CP needs to trigger the intra-gNB DU handover. If the reported PCI belongs to cell of other DU within the same CU-CP, inter-DU handover is triggered. If the reported PCI belongs to cell of other gNB, inter-CU handover is triggered through the MeNB.

Process step at 3 & 4) a Bearer Context Modification request is sent from CU-CP to CU-UP at step number 3 to request the creation of new UL F1-U TEID at step 3. New UL F1-U TEID is allocated for all the bearers for this UE by the Control Unit-User Plane (CU-UP). The Bearer Context Modification Response (New UL F1-U TEID) is transmitted from the CU-UP to the CU-CP at step 4.

Process step at 5) a UE Context Modification Request is sent from CU-CP to DU. The DU will then allocate the UE context in the new target cell.

Process step at 6) the UE Context Modification Response is sent from the DU to the CU-CP.

Process step at 7) the Bearer Context Modification is sent from the CU-CP to the CU-UP.

Process step at 8) the Bearer Context Modification Response is sent from the CU-UP to the CU-CP. As the context is successfully setup in the target cell in the CU-UP and DU, the gNB CU-CP needs to stop the data flow from the DU.

Process steps numbers 9) to 11) correspond to stopping the data flow from the source cell. At process step 9) the UE Context Modification Request Transmission Action Indicator = stop. The gNB-DU stops the transmission for UE.

Process step at 10) Downlink Data Delivery Status is provided from DU to CU-UP.

Process step at 11) UE context Modification Response is provided from DU to CU-CP.

Process step at 12) SgNB needs to send SgNB modification required containing (CG-Config -> RRCReconfiguration, scg-RB-Config). Scg-RB-Config contains the RB configuration for the target cell.

Process step at 13) On receiving the SgNB modification required with the SCG to MCG container, MeNB shall handle the container similar to SgNB addition response and send RRCConnectionReconfiguration towards the UE.

Process step at 14) the UE replies with RRCConnectionReconfigurationComplete towards the MeNB.

Process step at 15) MeNB sends the SgNB Modification Confirm to the SgNB.

Process steps at 16) and 17) are related to UE context modification procedure to inform the DU that RRC reconfiguration is successfully sent to UE.

Process step at 18) illustrates a Random-access failure or SSB synch failure happens between UE and the target NR cell. So, UE experiences SCG RLF.

Process step at 19) the UE triggers SCGFailureInformationNR towards the MeNB indicating the RLF failure. As part of this message, the UE would also include the current NR measurement results in the IE measResultSCG.

Process steps numbers 20) to 23), as an SCG failure is received from the UE, MeNB triggers SgNB release and MeNB converts the SCG split bearer to MCG bearer.

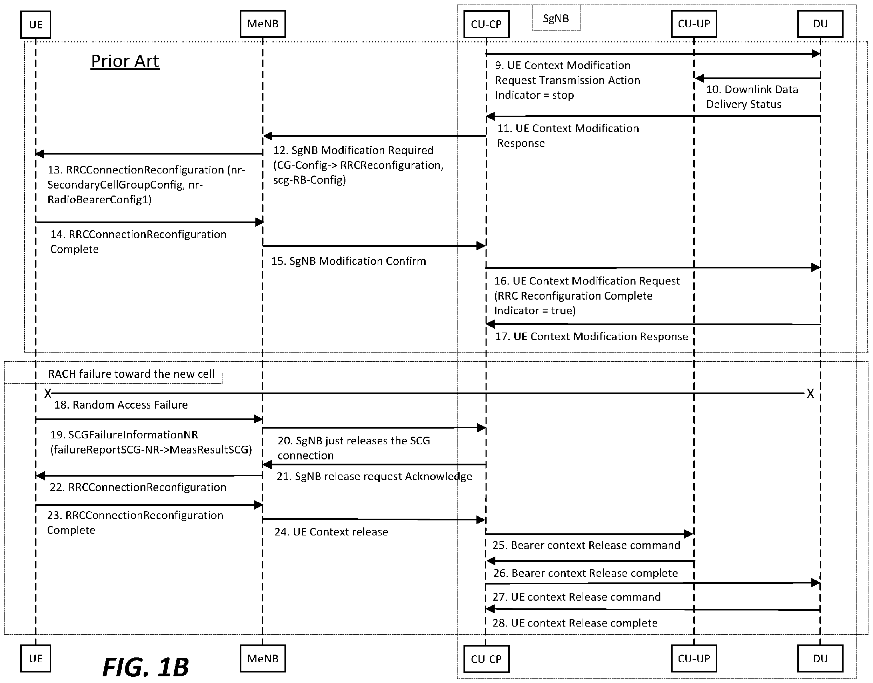

Process step at 20) MeNB sends SgNB release request to CU-CP. In FIG. 1B according to the prior art, from the SgNB perspective, the handover has failed, but the SgNB does not know why the handover failure has occurred. In the present invention as can be seen in FIG. 3B, MeNB to SgNB Container = CG-ConfigInfo-> scgFailureInfo = failureReportSCG-NR (as received in SCGFailureInformationNR). The CU-CP analyzes the failureReportSCG-NR and then the CU-CP categorizes the 5G SCG handover failure(s).

Process step at 21) the CU-CP sends SgNB release request Acknowledge to MeNB.

Process steps at 22) and 23) MeNB sends RRCConnectionReconfiguration to UE and the UE sends RRCConnectionReconfigurationComplete to MeNB.

It should be noted that MeNB will release the UE context in SgNB.

Process steps 24) to 28) illustrate UE context in SgNB being released.

Process step 24) provides UE context release sent from MeNB to CU-CP.

Process steps 25) and 26) show the Bearer Context Release command sent from CU-CP to CU-UP, and the Bearer Context Release complete signal sent from CU-UP to CU-CP.

Process steps 27) and 28) show the UE Context Release command sent from CU-CP to DU, and the UE Context Release complete signal sent from DU to CU-CP.

As can be seen, SgNB initiated the SCG handover. However, the UE experienced SCG RLF and triggered SCGFailureInformationNR towards MeNB. Since, SgNB doesn't know the exact reason (e.g., whether the failure is due to too early/too late/wrong cell handover) of the NR SCG handover failure. As the SgNB does not know the reason for the failure, the SgNB can't take proper corrective action such that these kinds of SCG handover failures would not repeat in the future and degrade the handover KPIs.

The exact cause of SCG handover failures is not known explicitly and SgNB/UE logs need to be analyzed to identify the exact root cause.

In one configuration of the invention, an algorithm is used to categorize the NR SCG failures as Too Early, Too Late and Wrong cell handover based on the following:

In Process step 19) as was previously discussed, the UE triggers SCGFailureInformationNR towards the MeNB indicating the RLF failure. As part of this message, the UE would also include the current NR measurement results (at the time of RLF) in the IE measResultSCG. The NR measurement results are passed from MeNB to SgNB as part of a SgNB Release Request with MeNB to SgNB container containing measResultSCG (refer Process step 20) in IE scgFailureInfo. On receiving this message, SgNB decodes the IE measResultSCG and then categorizes the NR SCG handovers as too early/too late/wrong cell handover. MeasResultsSCG includes the following information:

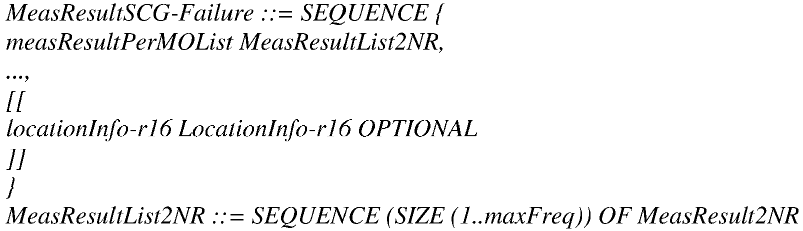

MeasResult2NR contains the measurement results for each NR frequency as configured by SgNB (prior to the RLF) in the last measurement configuration. SgNB CU-CP needs to analyze the MeasResult2NR as follows:

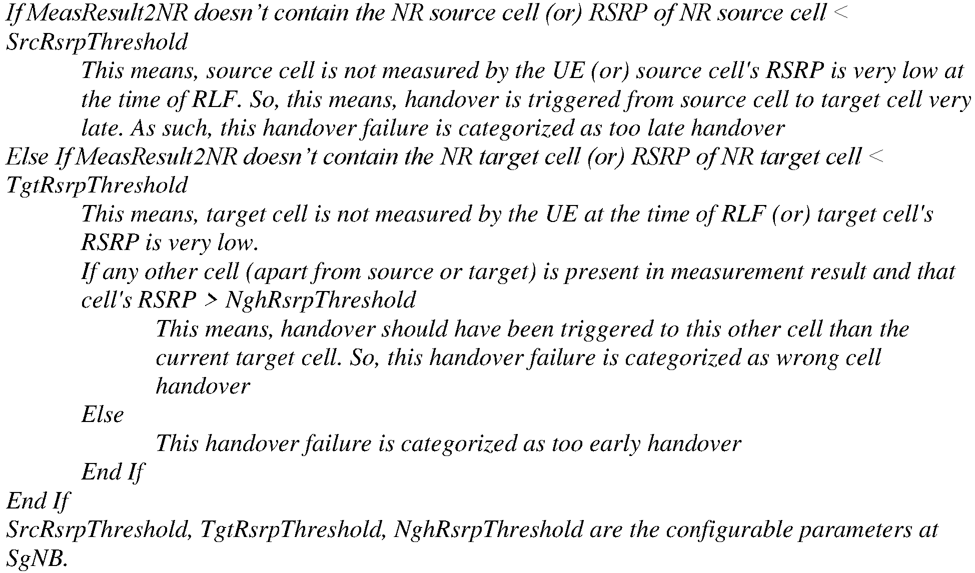

After categorizing the NR SCG handover failure as too early/too late/wrong cell handover as above, the gNB CU-CP will fine-tune the handover parameters (time to trigger, offset, threshold, hysteresis... etc.). After fine-tuning, the overall handover failure rate would be reduced significantly.

The same type of problem is applicable for all types of NR SCG handovers, including for example, SgNB Inter-DU handover, SgNB Inter-CU handover and so on. Moreover, this problem is applicable for both SCG intra-frequency and inter-frequency handovers. For these a similar solution can be used.

Even without any SCG handover triggered, SCGFailureInformationNR may be triggered by UE towards the MeNB. MeNB & SgNB may follow the same call flow even for this scenario. If SCG RLF happens without any handover trigger, this may be due to a "too late" handover scenario as well.

Moreover, the same problem is applicable for other MR-DC mechanisms like EN-DC, NR-NR DC, NGEN-DC, NE-DC and Dual Connectivity within eNB. The proposed solution in this application will be applicable for those configurations as well.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method for categorizing 5G Secondary Cell Group (SCG) handover failures in Multi-Radio Dual Connectivity (MR-DC) where User Equipment (UE) accesses a Master evolved Node B (MeNB) connected to a 5G Control Unit-Control Plane (CU-CP) and to a 5G Control Unit-User Plane (CU-UP) of the UE, the method comprising the steps of:
the SgNB initiating intra Distributed Unit (DU) handover from a source cell towards a target cell;
the CU-CP allocating UE context in the target cell;
the CU-CP stopping a data flow from the DU when the UE context is successfully setup in the target cell in CU-UP and DU;
the DU stopping transmission of data for the UE and the CU-UP stopping the transmission of data for the UE toward the source cell;
the CU-CP starting a timer for a duration of reconfiguration of the UE for the target cell;
wherein when a SCG random-access failure from the UE to the DU occurs, the UE triggers a Radio Link Failure (RLF) message to the MeNB, which includes New Radio (NR) measurement results at the time of the failure;
the MeNB transmitting the RLF message to the 5G CU-CP; and
the 5G CU-CP decoding the RLF message and categorizing the SCG failure.

2. The method of claim 1, wherein the SCG failure is categorized as a too late handover failure.

3. The method of claim 1, wherein the SCG failure is categorized as a too early handover failure.

4. The method of claim 1, wherein the SCG failure is categorized as a wrong cell handover failure.

5. The method of claim 1, wherein the SCG failure is categorized as a SCG RLF too late handover without any handover trigger from SCG.

6. The method of claim 1, wherein the SCG failure is categorized as a SCG RLF/handover failure for all MR-DC variants.

7. The method of claim 1, wherein the SCG failure is selected from the group consisting of: Intra-DU, Inter-DU, Inter-CU, and combinations thereof.

8. The method of claim 1, wherein the SCG failure is selected from the group consisting of: Intra-frequency handovers, Inter-frequency handovers, and combinations thereof.

9. The method of claim 1, wherein prior to the step of the SgNB initiating intra Distributed Unit (DU) handover, the method comprises the following steps:
the MeNB receiving from the UE a Radio Resource Control (RRC) transfer message that includes measurement results containing intra-frequency/inter-frequency neighbor cell Physical Cell Id (PCI) and corresponding Reference Signal Received Power (RSRP); and the MeNB transmitting the transfer message as a container in a UE report to the CU-CP; and
the CU-CP decoding the transfer message.

10. The method of claim 9, wherein the setup of the UE context comprises the steps:
the CU-UP allocating a new context modification request for all bearers for the UE;
the CU-UP transmitting the context modification request to the CU-CP; and
the CU-CP transmitting the context modification request to the DU.

11. The method of claim 10, further comprising the steps of:
the DU transmitting a context modification response to the CU-CP;
the CU-CP transmitting a bearer context modification request to the CU-UP; and
the CU-UP transmitting a bearer context modification response to the CU-CP.

12. The method of claim 11, wherein the step of the CU-CP stopping a data flow from the DU comprises the steps:
when a UE Context Modification Request Transmission Action Indicator indicates stop, the gNB-DU stops the transmission for UE;
a Downlink Data Delivery Status is provided from the DU to the CU-UP; and
a UE context Modification Response is provided from the DU to the CU-CP.

13. The method of claim 12, further comprising the steps of:
the SCG transmits a Secondary next generation Node B (SgNB) modification required signal containing a Resource Block (RB) configuration for the target cell to the MeNB;
the MeNB transmits a RRC connection reconfiguration signal to the UE;
the UE transmits a RRC connection reconfiguration complete signal to the MeN; and
the MeNB sends a SgNB modification confirm signal to the SgNB.

14. The method of claim 13, wherein the RLF message to the MeNB includes current NR measurement results, the method further comprising:
the MeNB triggers SgNB release and the MeNB converts the SCG split bearer to an MCG bearer;
the MeNB sends a SgNB release request to the CU-CP; and
the CU-CP sends a SgNB release request acknowledge to the MeNB.

15. The method of claim 14, the method further comprising:
the MeNB sends a RRC connection reconfiguration signal to the UE; and
the UE sends a RRC connection reconfiguration complete signal to the MeNB;
wherein if the conversion from SCG split bearer to MCG bearer is successful, then the UE context is released in the SgNB.
